# EUROPÄISCHE PATENTSCHRIFT

(11) **EP 3 359 427 B1**
(45) Veröffentlichungstag und Bekanntmachung des Hinweises auf die Patenterteilung: **16.12.2020**
(21) Anmeldenummer: 16763863.4
(22) Anmeldetag: 13.09.2016
(51) Int. Cl.: B60S 1/34

(54) **WISCHARM SOWIE SCHEIBENWISCHANLAGE FÜR EIN KRAFTFAHRZEUG**
WIPER ARM AND WINDSCREEN WIPER SYSTEM FOR A MOTOR VEHICLE
BRAS D'ESSUIE-GLACE ET SYSTÈME D'ESSUIE-GLACE POUR UN VÉHICULE À MOTEUR

(30) Priorität: 08.10.2015 DE 102015219529
(43) Veröffentlichungstag der Anmeldung: 15.08.2018
(73) Patentinhaber: Robert Bosch GmbH, 70442 Stuttgart (DE)
(72) Erfinder: RAPP, Harald, 77815 Buehl (DE); HORVATH, Zsofia, 8175 Balatonfüzfo (HU); KOSARAS, Peter, 1101 Budapest (HU)
(86) Internationale Anmeldenummer: PCT/EP2016/071605
(87) Internationale Veröffentlichungsnummer: WO 2017/060048

(56) Entgegenhaltungen:
- EP-A1- 2 177 404
- US-A- 1 362 175
- US-A- 5 545 956
- US-B1- 6 453 504
- US-B1- 8 650 702

## Beschreibung

### Stand der Technik

Die Erfindung betrifft einen Wischarm und eine Scheibenwischanlage gemäß der Gattung der unabhängigen Ansprüche.

Die WO 03037690A1 beschreibt einen Wischarm mit einer Spiralfeder. Die Spiralfeder ist an einem Gelenkteil und einem Hebelteil eingehängt. Dabei ist die Spiralfeder mit Haken an separaten Fortsätzen der Teile angehängt. Auf diese Weise wird ein System geschaffen, das eine große Bauhöhe aufweist, wobei ein Haken der Feder aus dem Hebelteil hinausragt. Damit ist die Bauhöhe des Wischarms im endmontierten Zustand nicht nur durch die Höhe des Hebelteils, sondern auch durch die aus dem Hebelteil hinausragende Feder bestimmt.

US A 1 362 175 offenbart ein Wischarm gemäß dem Oberbegriff des Anspruchs 1.

### Beschreibung der Erfindung

Die erfindungsgemäße Vorrichtung mit den Merkmalen der unabhängigen Ansprüche hat dem Stand der Technik gegenüber den Vorteil, dass die Bauhöhe des Wischarms reduziert ist. Um die vorteilhaften technischen Effekte zu erzielen, weist der Wischarm das Gelenkteil und das Hebelteil auf. Das Gelenkteil ist dabei an einer Abtriebswelle der Wischanlage befestigt. Die Abtriebswelle ist mit einem Motor und einem Getriebe verbunden, so dass der Motor kinetische Energie über das Getriebe auf die Abtriebswelle abgeben kann. Das Hebelteil ist an dem Gelenkteil angebracht und bildet mit dem Gelenkteil ein Gelenk aus, welches zwischen dem Hebelteil und dem Gelenkteil angeordnet ist. Durch das Gelenk ist das Hebelteil gegenüber dem Gelenkteil verkippbar. Das Gelenk erzeugt somit einen Freiheitsgrad. In Richtung dieses Freiheitsgrads kann das Hebelteil bewegt werden. Dabei kann das Hebelteil geschwenkt werden. Das Hebelteil bzw. ein an dem Hebelteil angebrachtes Gummielement zum Wischen einer Scheibe eines Kraftfahrzeugs liegt auf der Scheibe auf. Aus dieser Position kann das Hebelteil verkippt werden. Dabei wird es in Richtung Gelenkteil gekippt. Das Hebelteil führt dabei eine Schwenkbewegung weg von der Scheibe aus. In der Position auf der Scheibe wird das Hebelteil durch eine Feder gehalten und vorgespannt. Die Feder erzeugt eine Druckkraft auf die Scheibe. Das Hebelteil wird dabei mit einem Drehmoment, welches aus der Federkraft und der Länge des Hebels berechnet wird, in Richtung Scheibe gepresst. Dadurch sind das Hebelteil und das Gelenkteil durch die Feder miteinander verbunden. Die Feder erzeugt also eine relative Kraft zwischen Hebelteil und Gelenkteil. Damit die Bauhöhe effektiv verringert werden kann, ist die Feder als Torsionsfeder ausgeführt. Die Torsionsfeder ist im Bereich des Gelenks angeordnet.

Durch die abhängigen Ansprüche werden Maßnahmen aufgezeigt, die eine vorteilhafte Weiterbildung und Verbesserung der unabhängigen Ansprüche ermöglicht.

Vorteilhafter Weise weist das Gelenkteil und das Hebelteil des Wischarms ein u-förmiges Querschnittsprofil bezüglich der Achsialrichtung auf. Das bedeutet, schneidet man das Hebelteil bzw. das Gelenkteil quer zur Achsialrichtung, weist der Querschnitt ein Profil auf, welches eine u-Form aufweist. Die u-Form zeichnet sich dadurch aus, dass sie zwei Seitenelemente aufweist, die quer zu einem Rückenelement angeordnet sind. Somit ist das Rückenelement zwischen den Seitenelementen angeordnet. Die Seitenelemente weisen eine freie Kante auf, die im Querschnitt als freies Ende erscheint. Gegenüber dem freien Ende ist das Rückenelement angeordnet, welches einstückig mit den Seitenelementen ausgebildet ist und nahtlos in diese übergeht. Die Torsionsfeder ist vollständig zwischen den Seitenelementen angeordnet, so dass die Torsionsfeder nicht zwischen den Seitenelementen bzw. aus dem Hebelteil bzw. dem Gelenkteil hinausragt. Betrachtet man das Gelenkteil bzw. das Hebelteil aus einer Perspektive in der man auf die Seitenelemente in der Weise drauf schaut, dass das Rückenteil mit der Richtung der Perspektive fluchtet, dann ist die Torsionsfeder vollständig von einem Seitenelement verdeckt. Mit anderen Worten: Das Seitenelement ist in seiner ganzen körperlichen Ausdehnung zwischen den Seitenelementen so angeordnet, dass es vollständig in den Hebel bzw. dem Gelenkteil eingelassen ist. Diese Ausführungsform weist einen geringen Bauraum in Erstreckungsrichtung der Seitenelemente auf.

Gemäß der Erfindung umgreifen die Seitenelemente des Hebelteils im Bereich des Gelenks das Gelenkteil. Dabei sind die Seitenelemente des Hebelteils von außen an das Gelenkteil angelegt. Dabei liegen die Seitenelemente des Hebelteils vorzugsweise auf den Seitenelementen des Gelenkteils. Als Bereich des Gelenks ist der Abschnitt des Gelenkteils bzw. des Hebelteils zu verstehen, welcher strukturell eingerichtet ist, um ein Gelenk auszubilden, welches mit einer Torsionsfeder zusammenwirkt. Unter strukturell eingerichtet sind konstruktive Maßnahmen des Maschinenbaus zu verstehen. Der Bereich, in dem die Seitenelemente des Hebelteils auf dem Gelenkteil angeordnet sind, sprich eine Überlappung zwischen Gelenkteil und Hebelteil erzeugt ist, wird durch einen Bolzen fixiert. Der Bolzen ragt dabei in den Raum zwischen den Seitenelementen hinein. Dieser Raum ist im Folgenden als Innenraum des Gelenk- bzw. Hebelteils bezeichnet. Weiter ragt der Bolzen auch nach außen an den Seitenelementen hinaus. Der Bolzen ist dabei vorzugsweise ein einstückiger Bolzen, welcher durch die Seitenelemente und die Teile hindurch geschoben wird, so dass er sowohl im Gelenkteil, als auch im Hebelteil gelagert ist. Im Innenraum auf dem Bolzen ist die Torsionsfeder angeordnet. Dabei windet sich die Torsionsfeder um den Bolzen herum. Somit ist die Torsionsfeder im Innenraum des Gelenkteils angeordnet. Weist das Gelenkteil Seitenelemente auf, ist die Torsionsfeder zwischen den Seitenelementen des Gelenkteils angeordnet, während die Seitenelemente des Hebelteils auf den Seitenelementen des Gelenkteils von außen angeordnet sind. Der Bolzen bildet somit den Drehpunkt des Gelenks aus. Der Bolzen ist wesentlich für das Gelenk. Vorzugsweise ist der Innenraum, in dem die Feder angeordnet ist, durch einen Quersteg abgegrenzt. Somit ist der Innenraum des Gelenkteils nicht durchgehend, sondern im Bereich des Gelenks durch einen Steg, welcher quer zu den Seitenelementen verläuft und mit diesen und dem Rückenteil einstückig ausgebildet ist, begrenzt.

In der Erfindung weisen die Seitenelemente Laschen auf. Die Laschen ragen in den Innenraum hinein. Dabei sind die Laschen vorzugsweise von den freien Enden der Seitenelemente ausgehend in den Innenraum hinein gebogen. Die Laschen ragen dabei nicht über die freien Enden der Seitenelemente in Ausdehnungsrichtung der Seitenelemente hinaus. Die Ausdehnungsrichtung der Seitenelemente ist die Richtung, welche sich quer zum Rückenelement erstreckt. Es ist denkbar, dass lediglich eine Lasche am gesamten Hebelteil ausgebildet ist. Vorzugsweise ist jeweils eine Lasche an einem Seitenelement ausgebildet. Es ist aber auch denkbar, dass mehrere Laschen an einem Seitenelement ausgebildet sind. Die Laschen können auch am Rückenelement ausgebildet sein. Es ist auch denkbar Laschen auszubilden, die nicht an den freien Enden der Seitenelemente, sondern zwischen dem freien Ende und dem Rückenelement im Innenraum am Seitenelement ausgebildet sind. Es ist denkbar, dass die Laschen aus den Seitenelementen bzw. dem Rückenteil ausgeschnitten sind. Die Laschen, die vorzugsweise zum Einsatz kommen, sind als Fortsätze ausgebildet, die sich von den freien Enden in den Innenraum erstrecken und dabei in Ausdehnungsrichtung der Seitenelemente nicht über die freien Enden hinausragen. Die Laschen bilden mit den Seitenelementen einen rechten Winkel. Es ist aber auch denkbar, dass die Laschen einen anderen Winkel als einen rechten mit den Seitenelementen ausbilden. Die Laschen sind gerade ausgebildet. An den Laschen liegt die Torsionsfeder an. Die Torsionsfeder weist Fortsätze auf, die am Ende der Torsionsfeder abstehen. Denke man sich einen Draht, der zu einer Torsionsfeder aufgewickelt wird, so weist der Draht zwei freie Enden auf, die von der Spirale der Torsionsfeder abstehen. Diese freien Enden sind die Fortsätze. Diese Fortsätze liegen an den Laschen an. Durch das Anlegen der Fortsätze an die Laschen wird die Torsionsfeder gespannt.

Sind zwei Torsionsfedern im Bereich des Gelenks angeordnet, so ist es möglich, einen erhöhten Vorspanndruck des Hebelteils auf die Scheibe zu erzeugen. Darüber hinaus ist es möglich, den Hebelteil gleichmäßig vorzugspannen, so dass keine Querkraft bezüglich des Freiheitsgrades auf das Gelenk wirkt.

Gemäß der Erfindung weist das Gelenkteil eine Stützfläche auf, an dem ein Fortsatz der Torsionsfeder anliegen kann. Die Stützfläche ist so eingerichtet, dass der Fortsatz mit seinem freien Ende bzw. mit einem Abschnitt zwischen dem freien Ende und der ersten Windung der Torsionsfeder am Gelenkteil anliegen kann. Die Stützfläche ist an dem Rückenelement des Gelenkteils ausgebildet. Dadurch wird eine Stützfläche erzeugt, die zwischen den Seitenelementen ausgebildet ist. Die Stützfläche weist dabei insbesondere eine Fläche auf, die als Teil des Rückenelements ausgeformt ist. Dabei weist die Stützfläche in Richtung der freien Enden der Seitenelemente. Die Stützfläche ist an dem achsialen Ende des Gelenkteils angeordnet, welches zum Hebelteil hin gerichtet ist. Auf diese Weise kann eine Torsionsfeder verbaut werden, die wenigstens im vorgespannten Zustand Fortsätze aufweist, welche im Wesentlichen in eine gemeinsame Richtung gerichtet sind, was bedeutet, dass die Fortsätze einen Winkel zwischen Lasche und Stützfläche einschließen, der geringer ist als 180°. Dabei sind die Fortsätze vorzugsweise in Richtung des Hebelteils gerichtet, während die Torsionsfeder auf einem Bolzen angeordnet ist und zwischen Seitenelementen des Gelenkteils im Innenraum des Gelenkteils angeordnet ist.

Es ist zweckmäßig, wenn an einer Lasche eines Seitenelements des Hebelteils ein Fortsatz der Torsionsfeder anliegt, während der zweite Fortsatz an der Stützfläche des Rückenelements des Gelenkteils anliegt. Es ist auch denkbar, dass an der Stützfläche wenigstens zwei Fortsätze von insbesondere zwei Torsionsfedern anliegen. Gemäß der Erfindung wird eine Torsionsfeder ausgebildet, die einstückig ist, jedoch zwei Spiralen aufweist und zwei Fortsätze mit freien Enden. Zwischen den beiden Spiralabschnitten der einen Torsionsfeder ist der Draht fortsatzartig von den Spiralen weggeführt. Dabei weist dieser fortsatzartige Abschnitt im gespannten Zustand die gleiche Ausdehnungsrichtung auf, wie die Fortsätze mit den freien Enden. Der fortsatzartige Abschnitt ist gerade. Der fortsatzartige Abschnitt besteht aus dem Draht, welcher schlaufenartig von dem ersten Spiralabschnitt ausgeht, um dann eine 180°-Biegung auszuführen und zu dem zweiten Spiralabschnitt hinführt. Die Möglichkeit, Fortsätze, Stützfläche und Torsionsfeder auf unterschiedlichste Weisen auszuführen, stellt höchste Flexibilität der erfindungsgemäßen Vorrichtung bereit.

### Zeichnungen der Erfindung

Es zeigen:
Figur 1 eine Seitenansicht des erfindungsgemäßen Wischarms im Bereich eines Gelenks,
Figur 2 Draufsicht in den Innenraum des Wischarms im Bereich des Gelenks,
Figur 3 ein Kraftfahrzeug mit dem erfindungsgemäßen Wischerarm.

### Ausführungsformen der Erfindung

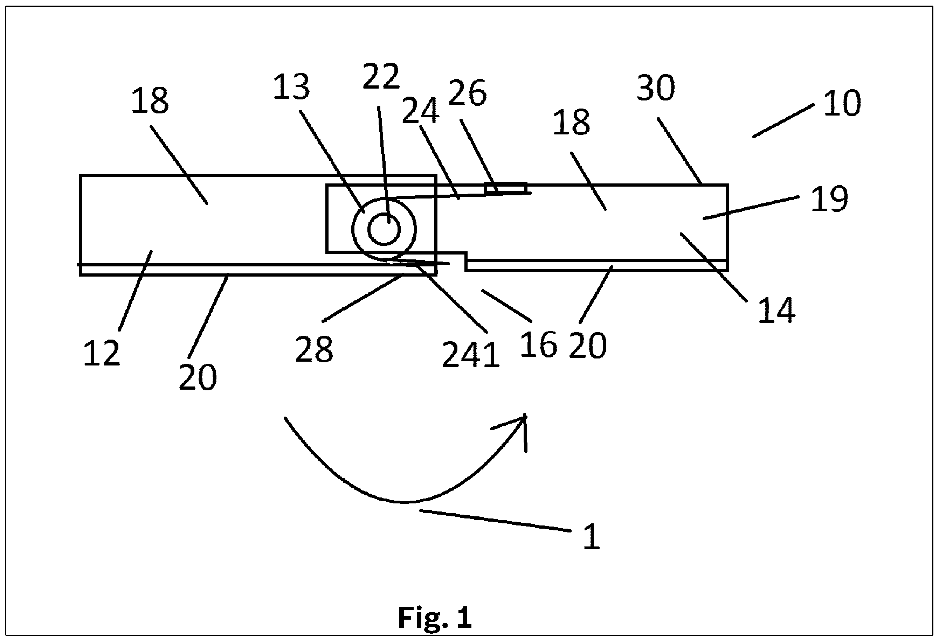

In Figur 1 ist die Seitenansicht eines erfindungsgemäßen Wischarms 10 gezeigt. Der Ausschnitt des erfindungsgemäßen Wischarms 10 zeigt den Bereich des Gelenks 16. Der Wischarm 10 weist dabei ein Gelenkteil 12 und ein Hebelteil 14 auf. Das Gelenkteil 12 und das Hebelteil 14 bilden ein gemeinsames Gelenk 16 aus. Das Gelenk 16 wirkt mit einer Feder 13 zusammen. Dabei ist die Feder 13 im Gelenk 16 angeordnet. Die Feder 13 ist als Torsionsfeder 13 ausgeführt. Die Torsionsfeder 13 weist dabei eine Spirale auf und wenigstens zwei Fortsätze 24, 240, 241, 242. Der Hebelteil 14 umfasst ein Rückenelement 20 und zwei Seitenelemente 18. Die Seitenelemente 18 weisen ein freies Ende 30 auf. Auf dem gegenüberliegenden Ende bezüglich des freien Endes 30 ist das Rückenelement 20 einstückig mit dem Seitenelement 18 verbunden. Auf diese Weise wird ein u-förmiger Querschnitt des Hebelteils 14 erreicht. Zwischen den Seitenelementen 18 bildet sich auf diese Weise ein Innenraum 19 aus. Eine ähnliche Struktur weist auch das Gelenkteil 12 auf. Das Gelenkteil 12 weist ebenfalls Seitenelemente 18 und ein Rückenelement 20 auf, welche in gleicher Weise zueinander angeordnet sind. Die Seitenelemente 18 des Hebelteils 14 sind von außen an die Seitenelemente 18 des Gelenkteils 12 angeordnet, so dass die Seitenelemente 18 des Hebelteils 14 auf den Seitenelementen 18 des Gelenkteils 12 aufliegen. Das Hebelteil 14 umgreift das Gelenkteil 12. Das Hebelteil 14 und das Gelenkteil 12 bilden das gemeinsame Gelenk 16 auf, indem ein Bolzen 22 durch die Teile 12, 14 hindurch ragt. Der Bolzen 22 ist sowohl in dem Gelenkteil 12, als auch in dem Hebelteil 14 gelagert. Auf diese Weise ist eine Relativbewegung zwischen Gelenkteil 12 und Hebelteil 14 möglich. Die Bewegung ist eine Schwenkbewegung in eine Richtung und bildet somit einen Freiheitsgrad für das Hebelteil 14. Die Torsionsfeder 13 ist auf dem Bolzen 22 angeordnet. Die Fortsätze 24 liegen dabei an den Teilen 12, 14 an. An dem freien Ende 30 des Seitenelements 18 des Hebelteils 14 ist eine Lasche 26 ausgebildet, die in den Innenraum 19 hineinragt und bezüglich der Erstreckungsrichtung des Seitenelements 18 quer zum Rückenelement 20 nicht über das freie Ende 30 hinausragt. Die Lasche 20 ist parallel zum Rückenelement ausgebildet. An der Lasche 26 liegt ein Fortsatz 24, 240 an. Dieser erste Fortsatz positioniert die Spiralfeder 13 und stellt eine definierte Vorspannkraft ein, mit der der Hebelteil 14 gespannt ist. Die Spiralfeder 13 weist auch einen zweiten Fortsatz 241 auf, welcher an einem Stützelement 28 des Gelenkteils 12 anliegt. Die Stützfläche 28 ist an dem Rückenelement 20 des Gelenkteils 12 derart angeordnet, dass es im Innenraum 19 in Richtung der freien Enden 30 der Seitenelemente 18 weist. Somit liegt der zweite Fortsatz 241 mit einem Abschnitt zwischen seinem Ende und der Spiralfeder an der Stützfläche 28 an. Damit das Gelenk 16 ausgebildet wird, ist das Rückenelement 20 des Hebelteils 14 im Bereich der Torsionsfeder 13 ausgespart. Im Bereich der Torsionsfeder 13 bzw. im Bereich des Gelenks 16 sind im Wesentlichen nur Seitenelemente 18 des Hebelteils 14 ausgebildet. Im Wesentlichen bedeutet das an dem Ende des Hebelteils 14, welches zum Gelenkteil 12 gerichtet ist, ein Abschnitt ausgebildet ist, der kein Rückenelement 20 aufweist.

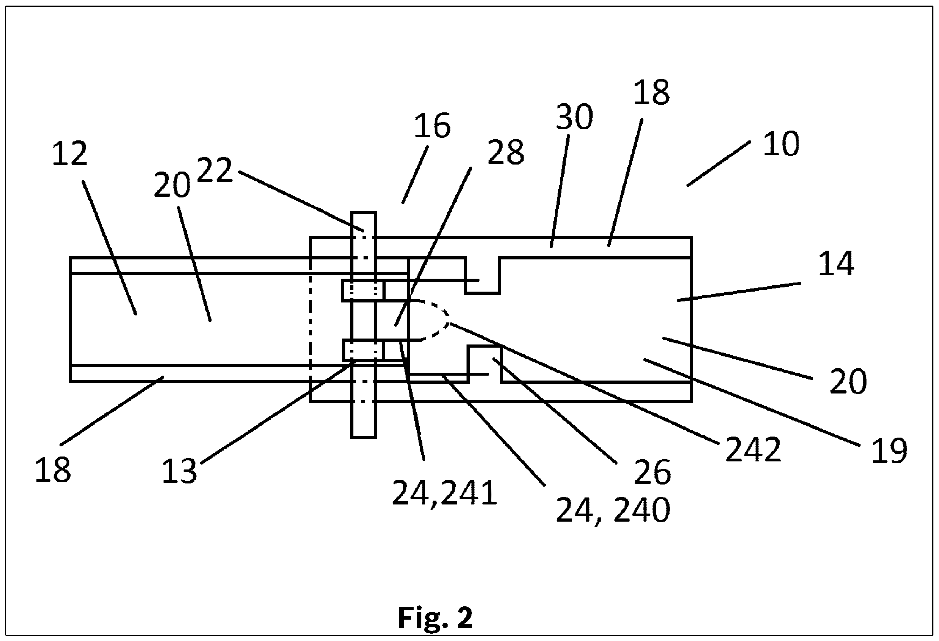

In Figur 2 ist die Draufsicht auf den Wischarm 10 gezeigt, so dass in den Innenraum 19 des Wischarms geschaut werden kann. Dabei sind zwei Laschen 26 ausgebildet. Es ist jeweils eine Lasche 26 an einem Seitenelement 18 an dem freien Ende 30 ausgebildet. An jeweils einer Lasche 26 liegt jeweils ein erster Fortsatz 240 an. Dies wird erreicht, indem zwei Torsionsfedern 13 auf dem Bolzen 22 angeordnet sind. Dadurch liegen zwei zweite Fortsätze 241 auf der Stützfläche 28 an. Es ist auch denkbar, dass die Torsionsfedern 13 als eine Torsionsfeder 13 ausgebildet sind, die zwei Spiralen aufweist. Dadurch sind die zweiten Fortsätze 241 als eine fortsatzartige Schlaufe 242 ausgebildet. Die fortsatzartige Schlaufe 242 ist durch die gestrichelte Linie dargestellt. Die Schlaufe 242 erstreckt sich dabei von den Spiralen 13 der Torsionsfeder 13 in Richtung des Hebelteils 14. Somit ist die fortsatzartige Schlaufe 242 aus zwei Drähten ausgebildet, im Gegensatz zu dem ersten Fortsatz 240, der lediglich einen Draht mit einem freien Ende darstellt. Die Stützfläche 28, an der die Fortsätze 240 anliegen, ist am Ende des Gelenkteils 12 ausgebildet. Dabei ist das Ende gemeint, welches zum Hebelteil 14 gerichtet ist. Dabei ist der Bolzen 22 durch die Seitenelemente 18 der beiden Teile 12, 14 durchgeführt. Die Torsionsfeder 13 ist in dem Bereich im Innenraum 19 auf dem Bolzen 22 angeordnet, indem die Seitenelemente 18 der beiden Teile 12, 14 miteinander überlappen. Entlang des Bolzens 22 ist somit ein Seitenelement 18 des Hebelteils 14, dann ein Seitenelement 18 des Gelenkteils 12 und darauffolgend die Torsionsfeder 13 angeordnet. Es ist auch vorstellbar, dass erst das Seitenelement 18 des Gelenkteils 12 und anschließend das Seitenelement 18 des Hebelteils 14 angeordnet ist.

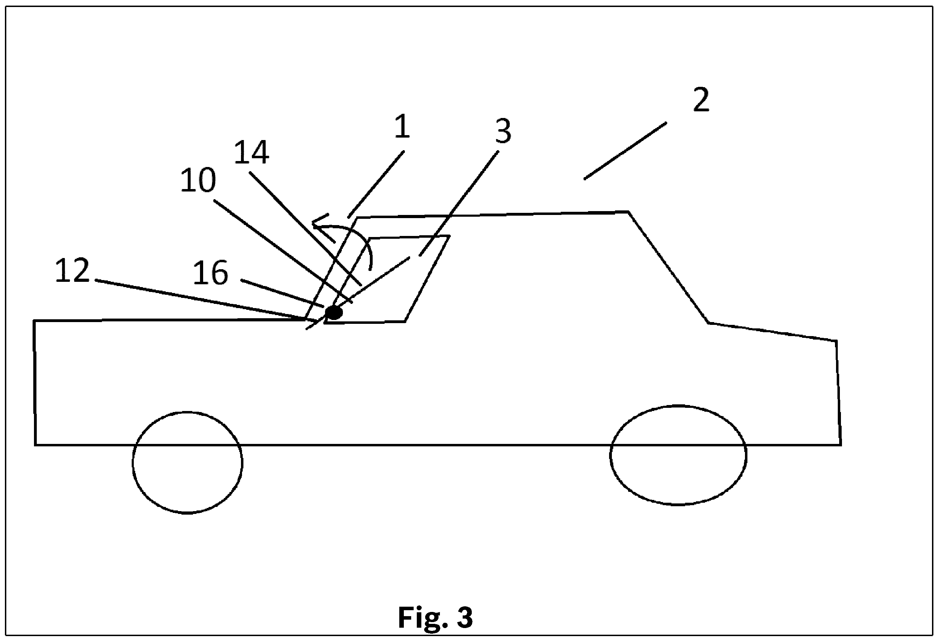

In Figur 3 ist ein Kraftfahrzeug 2 gezeigt, welches einen erfindungsgemäßen Wischarm 10 aufweist. Der Wischarm 10 umfasst das Gelenkteil 12 und das Hebelteil 14, wobei das Gelenk 16 zwischen den beiden Teilen 12, 14 angeordnet ist. Das Gelenkteil 12 ist an einer Abtriebswelle angebracht. Dabei ist die Abtriebswelle durch einen Motor angetrieben. Der Motor und die Abtriebswelle sind derart in dem Kraftfahrzeug 2 verbaut, dass lediglich die Abtriebswelle aus der Karosserie des Kraftfahrzeugs 2 herausragt, an die das Gelenkteil 12 befestigt wird. Das Hebelteil 14 ist verkippbar durch das Gelenk 16. Dabei kann das Hebelteil 14 in Richtung des Freiheitsgrads 1 von einer Scheibe 3 weggekippt werden. Die Torsionsfeder 13 erzeugt eine Vorspannkraft, mit der das Hebelteil 14 auf die Scheibe 3 gepresst wird. Die Torsionsfeder 13 erzeugt auch einen Drehmoment, welches dazu führt, dass eine Kraft notwendig ist, um das Hebelteil 14 entlang des Freiheitsgrads 1 zu schwenken.

Die Merkmale des vorherigen Texts sind miteinander kombinierbar, so dass sinnvolle Ausführungsformen auf dem technischen Gebiet des Wischarms mit Torsionsfedern 13 erreicht werden können.

## Patentansprüche

1. Wischarm (10), wobei der Wischarm (10) ein Gelenkteil (12) und ein Hebelteil (14) und eine Feder (13) umfasst, wobei die Teile (12, 14) ein gemeinsames Gelenk (16) ausbilden, sodass der Hebelteil (14) relativ zum Gelenkteil (12) einen Freiheitsgrad (1) aufweist, dabei sind die Teile (12, 14) durch die Feder (13) miteinander verbunden, wobei das Hebelteil (14) entlang des Freiheitsgrads (1) durch die Feder (130) positioniert wird, wobei die Feder (130) eine Torsionsfeder (13) ist, die im Bereich des Gelenks (16) angeordnet ist, wobei die Seitenelemente (18) des Hebelteils (14) im Bereich des Gelenks (16) das Gelenkteil (12) umgreifen, und ein Bolzen (22) quer zur Längsrichtung (1) durch die Seitenteile (18) und das Gelenkteil (12) hindurch ragt, wobei die Torsionsfeder (13) auf dem Bolzen (22) angeordnet ist, **dadurch gekennzeichnet, dass** die Seitenelemente (18) Laschen aufweisen, die zwischen die Seitenelemente (18) ragen, und die Torsionsfeder (13) Fortsätze (24) zum Spannen der Torsionsfeder aufweist, wobei die Fortsätze (24) an den Laschen (26) anliegen, und das Gelenkteil eine Stützfläche (28) für eine Fortsatz (24) aufweist, wobei die Stützfläche (28) am Rückenelement ausgeformt ist, und dass ein erster Fortsatz (240) an einer Lasche (26) des Hebelteils (14) und ein zweiter Fortsatz (241) an der Stützfläche (28) anliegt und dass an einer Lasche (26) ein Fortsatz (240) anliegt, und an der Stützfläche wenigstens zwei Fortsätze (241) anliegen, wobei die zweiten Fortsätze (241) als eine fortsatzartige Schlaufe (242) ausgebildet sind.

2. Wischarm (10) nach Anspruch 1, **dadurch gekennzeichnet, dass** die Teile (12, 14) ein U-förmiges axiales Querschnittsprofil aufweisen, dass durch zwei Seitenelemente (18) und ein Rückenelement (20) gebildet werden, wobei die Seitenelemente (18) an dem Rückenelement (20) befestigt sind, sodass die Seitenelemente (18) quer zum Rückenelement (20) angeordnet sind, und die Torsionsfeder (13) vollständig zwischen den Seitenelementen (18) angeordnet ist.

3. Wischarm (10) nach einem der vorherigen Ansprüche, **dadurch gekennzeichnet, dass** genau zwei Torsionsfedern (13) in dem Gelenk (16) angeordnet sind.

4. Wischarm (10) nach einem der vorherigen Ansprüche, **dadurch gekennzeichnet, dass** genau an jedem Seitenelementen (18) des Hebelteils (14) jeweils eine Lasche (26) angebracht ist.

5. Scheibenwischanlage (11) für ein Kraftfahrzeug (2) mit einem Wischarm (10) nach einem der vorherigen Ansprüche.

## Claims

1. Wiper arm (10), wherein the wiper arm (10) comprises an articulating part (12), a lever part (14) and a spring (13), wherein the parts (12, 14) form a common joint (16), with the result that the lever part (14) has a degree of freedom (1) relative to the articulating part (12), the parts (12, 14) thus being connected to one another by the spring (13), wherein the lever part (14) is positioned along the degree of freedom (1) by the spring (130), wherein the spring (130) is a torsion spring (13) which is arranged in the region of the joint (16), wherein the side elements (18) of the lever part (14) engage around the articulating part (12) in the region of the joint (16) and a pin (22) projects transversely to the longitudinal direction (1) through the side parts (18) and the articulating part (12), wherein the torsion spring (13) is arranged on the pin (22), **characterized in that** the side elements (18) have tabs which project between the side elements (18), and the torsion spring (13) has extensions (24) for tensioning the torsion spring, wherein the extensions (24) lie against the tabs (26), and the articulating part has a support surface (28) for an extension (24), wherein the support surface (28) is moulded on the back element, and **in that** a first extension (240) lies against a tab (26) of the lever part (14) and a second extension (241) lies against the support surface (28), and **in that** an extension (240) lies against a tab (26), and at least two extensions (241) lie against the support surface, wherein the second extensions (241) are in the form of an extension-like loop (242).

2. Wiper arm (10) according to Claim 1, **characterized in that** the parts (12, 14) have a U-shaped axial cross-sectional profile which is formed by two side elements (18) and a back element (20), wherein the side elements (18) are fastened to the back element (20), with the result that the side elements (18) are arranged transversely to the back element (20), and the torsion spring (13) is arranged completely between the side elements (18).

3. Wiper arm (10) according to one of the preceding claims, **characterized in that** exactly two torsion springs (13) are arranged in the joint (16).

4. Wiper arm (10) according to one of the preceding claims, **characterized in that** a tab (26) is respectively attached exactly to each side element (18) of the lever part (14).

5. Windscreen wiper system (11) for a motor vehicle (2), having a wiper arm (10) according to one of the preceding claims.

## Revendications

1. Bras d'essuie-glace (10), le bras d'essuie-glace (10) comprenant une partie d'articulation (12) et une partie de levier (14) et un ressort (13), les parties (12, 14) constituant ensemble une articulation (16) de telle sorte que la partie de levier (14) présente un degré de liberté (1) par rapport à la partie d'articulation (12), les parties (12, 14) étant en l'occurrence connectées l'une à l'autre par le ressort (13), la partie de levier (14) étant positionnée le long du degré de liberté (1) par le ressort (130), le ressort (130) étant un ressort de torsion (13) qui est disposé dans la région de l'articulation (16), les éléments latéraux (18) de la partie de levier (14) venant en prise autour de la partie d'articulation (12) dans la région de l'articulation (16) et un boulon (22) pénétrant transversalement à la direction longitudinale (1) à travers les parties latérales (18) et la partie d'articulation (12), le ressort de torsion (13) étant disposé sur le boulon (22), **caractérisé en ce que** les éléments latéraux (18) présentent des pattes qui s'étendent entre les éléments latéraux (18), et le ressort de torsion (13) présente des parties saillantes (24) pour serrer le ressort de torsion, les parties saillantes (24) s'appliquant contre les pattes (26), et la partie d'articulation présentant une surface de support (28) pour une partie saillante (24), la surface de support (28) étant formée sur l'élément de dos, et **en ce qu'**une première partie saillante (240) s'applique contre une patte (26) de la partie de levier (14) et une deuxième partie saillante (241) s'applique contre la surface de support (28) et **en ce qu'**une partie saillante (240) s'applique contre une patte (26), et au moins deux parties saillantes (241) s'appliquent contre la surface de support, les deuxièmes parties saillantes (241) étant réalisées sous forme de boucle (242) saillante.

2. Bras d'essuie-glace (10) selon la revendication 1, **caractérisé en ce que** les parties (12, 14) présentent un profil axial en section transversale en forme de U qui est formé par deux éléments latéraux (18) et un élément de dos (20), les éléments latéraux (18) étant fixés à l'élément de dos (20) de telle sorte que les éléments latéraux (18) soient disposés transversalement à l'élément de dos (20), et le ressort de torsion (13) étant disposé complètement entre les éléments latéraux (18) .

3. Bras d'essuie-glace (10) selon l'une quelconque des revendications précédentes, **caractérisé en ce qu'**exactement deux ressorts de torsion (13) sont disposés dans l'articulation (16).

4. Bras d'essuie-glace (10) selon l'une quelconque des revendications précédentes, **caractérisé en ce qu'**exactement une patte (26) est prévue respectivement au niveau de chaque élément latéral (18) de la partie de levier (14).

5. Installation d'essuie-glace (11) pour un véhicule automobile (2) comprenant un bras d'essuie-glace (10) selon l'une quelconque des revendications précédentes.
